# EUROPEAN PATENT APPLICATION

(11) **EP 2 851 244 A1**
(43) Date of publication of application: **25.03.2015**
(21) Application number: 12876873.6
(22) Date of filing: 18.05.2012
(51) Int. Cl.: B60R 16/02

(54) **VEHICLE INFORMATION DISPLAY DEVICE**

(71) Applicant: Toyota Jidosha Kabushiki Kaisha, Toyota-shi, Aichi 471-8571 (JP)
(72) Inventor: SUZUKI Shinichi, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/062795
(87) International publication number: WO 2013/171898

(57) **Abstract**

A main control section (305) of a mobile information terminal (300) determines a traveling state of a vehicle (100) between a stopped (parked) state and a traveling state. When the vehicle (100) is stopped (parked), an acquisition purpose of various types of information by a user is to acquire detailed information, and thus the main control section (305) displays, on a display (111) on the vehicle (100) side, information (content) acquired from an information providing center (200) in a display mode permitting a touch operation equivalent to that of the mobile information terminal (300). On the other hand, when the vehicle (100) is traveling, an acquisition purpose of various types of information by a driver is to acquire information necessary for traveling, and thus the main control section (305) displays, on the display (111) on the vehicle (100) side, information (content) acquired from the information providing center (200) in a display mode permitting a touch operation limited to be simplified compared with the touch operation of the mobile information terminal (300).

## Description

### Technical Field

The present invention relates to a vehicle information display device configured to control a display mode of information displayed on display means mounted on a vehicle.

### Background Art

There are hitherto known, for example, a navigation device and a program disclosed in Patent Literature 1. The related-art navigation device and program include determination means for determining a travel/stop of a vehicle, input means for inputting information for retrieval, control means for controlling inhibition/permission of an input in accordance with the travel/stop of the vehicle, and storage means for storing retrieved history information. The control means includes display control means for displaying a map when the vehicle changes from a stop to a travel and displaying a search screen based on the history information stored in the storage means when the vehicle changes from a travel to a stop. Thus, in the related-art navigation device and program, a point input operation can be prevented from being complicated by utilizing information input halfway on the search screen.

There is also known, for example, a vehicle navigation device disclosed in Patent Literature 2. In this related-art vehicle navigation device, when switching to a menu screen of a lower layer, data corresponding to a new menu screen stored in a drawing memory is divided into ten, and the respective pieces of divided data are transferred to a display memory and a display control circuit sequentially from a side nearest to an upper side of the screen. On the other hand, when switching to a menu screen of an upper layer, the respective pieces of divided data are transferred to the display memory and the display control circuit sequentially from a side nearest to a lower side of the screen. Thus, in this related-art vehicle navigation device, a display method of a new menu screen is changed depending on a layer to be switched. As a result, it can be visually understood which of the upper layer and the lower layer the menu screen has been switched to.

There is further known, for example, an in-vehicle device disclosed in Patent Literature 3. In this related-art in-vehicle device, when an image of an information component such as an audio operation button is displayed on a display device, a display region of the information component is acquired to determine a displayable region of a scene component. In this related-art in-vehicle device, when the image is displayed in a display region (display position and size) defined for the scene component, the display position of the scene component located outside the displayable region is changed within the displayable region. Moreover, in this related-art in-vehicle device, when the display region of the scene component is larger than the displayable region, the position of the scene component is changed so that the largest number of regions can overlap the displayable region.

### Citation List

### Patent Literature

[PTL 1] JP 2002-250636 A
[PTL 2] JP 08-225066 A
[PTL 3] JP 2005-178685 A

### Summary of Invention

By the way, in the related-art navigation device and the related-art in-vehicle device described above, after the vehicle has started traveling, inhibition of reception of user's operations other than a specific operation, or a so-called lockout, is executed. In this case, for operations other than those restricted by the lockout, it is important to appropriately switch (change) the display screen, in other words, information to be provided, in accordance with user's operations. Generally, however, there is a possibility that even the operations other than those restricted by the lockout may be affected by the operations restricted by the lockout to result in an operation system difficult to actually use.

In recent years, along with the popularization of a mobile information terminal owned by a user, more specifically, a smartphone, various types of information (various contents) can be easily acquired by using the mobile information terminal. It is suggested that the display of the information (content) acquired by the mobile information terminal be enabled via a display mounted on the vehicle.

However, even when the information (content) acquired by the mobile information terminal is displayed by using the display (display means) mounted on the vehicle, the operation is affected by the operations restricted by the lockout as described above. Thus, for the user, there is a high possibility that even in the case of the same information (content), an operation system and a screen transition method (transition mode) when the information (content) is checked by using the mobile information terminal and an operation system and a screen transition method (transition mode) when the information (content) is checked by using the display (display means) mounted on the vehicle may be different from each other. Such differences in operation system and screen transition method (transition mode) may give an uncomfortable feeling to the user. Particularly, due to the difference in operation system, the user may feel difficulty and complication of use.

### Solution to Problems

The present invention has been made to solve the above-mentioned problems, and it is an object thereof to provide a vehicle information display device that displays optimal information while securing high operability by appropriately changing information to be displayed based on a traveling state of a vehicle.

In order to achieve the above-mentioned object, a vehicle information display device according to one embodiment of the present invention includes display means and display mode control means. The display means displays various types of information requested by a user on board a vehicle to the user, and enables the user to perform various input operations. The display mode control means controls a display mode of the various types of information displayed by the display means.

One feature of the vehicle information display device according to one embodiment of the present invention resides in that the display mode control means is configured to: determine a traveling state of the vehicle; and change, based on the determined traveling state of the vehicle, a transition mode for sequentially changing the various types of information requested by the user and displayed by the display means. The display mode control means may include traveling state determination means for determining the traveling state of the vehicle, and changing means for changing a transition mode for sequentially changing the various types of information requested by the user and displayed by the display means based on the traveling state of the vehicle determined by the traveling state determination means.

In this case, specifically, the display mode control means may change the transition mode in accordance with an acquisition purpose of the various types of information requested by the user, which is changed based on the traveling state of the vehicle.

Further, in this case, more specifically, the display mode control means may be configured to: determine the traveling state of the vehicle between a stopped state and a traveling state; and change the transition mode in accordance with the acquisition purpose of the various types of information, which is different between the stopped state and the traveling state of the vehicle. Further, in this case, the display mode control means may be configured to: determine, when the vehicle is stopped, that the acquisition purpose of the various types of information is to acquire detailed information, and change the transition mode to achieve the acquisition purpose; and determine, when the vehicle is traveling, that the acquisition purpose of the various types of information is to acquire information necessary for traveling of the vehicle, and change the transition mode to achieve the acquisition purpose.

Further, in those cases, the display mode control means may be configured to: change, when the vehicle is stopped, the transition mode to a transition mode for changing the various types of information requested by the user and displayed by the display means in accordance with various input operations input to the display means by the user; and change, when the vehicle is traveling, the transition mode to a transition mode for changing the various types of information requested by the user and displayed by the display means in accordance with input operations input to the display means, which are limited compared with the various input operations.

Further, in those cases, the various types of information displayed by the display means may be information provided at least from an outside, and the display mode control means may acquire various types of information suited to the changed transition mode from the outside.

In this case, more specifically, the various types of information provided from the outside may be acquired via a mobile information terminal (for example, a cellular phone such as a smartphone) owned by the user on board the vehicle, and may be supplied from the mobile information terminal to the display mode control means to be displayed on the display means. Further, in this case, the display mode control means may be provided, for example, at the mobile information terminal. Further, in this case, the display means may be provided, for example, at the mobile information terminal.

In those cases, the display mode control means may permit, when the traveling state of the vehicle is a predetermined state, various input operations equivalent to various input operations input to the mobile information terminal by the user, and may change the transition mode to a transition mode for changing the various types of information requested by the user and displayed by the display means in accordance with the permitted various input operations. More specifically, in this case, the display mode control means may be configured to: change, when the vehicle is stopped, the transition mode to a transition mode for changing the various types of information requested by the user and displayed by the display means in accordance with the various input operations input to the display means by the user, which are equivalent to the various input operations input to the mobile information terminal by the user; and change, when the vehicle is traveling, the transition mode to a transition mode for changing the various types of information requested by the user and displayed by the display means in accordance with input operations input to the display means, which are limited compared with the various input operations input to the mobile information terminal by the user.

Accordingly, the display mode control means can change, based on the traveling state of the vehicle, more specifically, in accordance with the acquisition purpose of the various types of information requested by the user, which is changed in accordance with the traveling state of the vehicle, the transition mode for sequentially changing the various types of information requested by the user and displayed by the display means. As a result, the user can be provided with optimal information with optimal operability in accordance with the traveling state of the vehicle (alternatively, traveling scene of the vehicle).

Specifically, when the vehicle is in the stopped state as the traveling state of the vehicle, the display mode control means may determine that the acquisition purpose of the various types of information requested by the user is to acquire detailed information, and display information in a display mode enabling a transition mode for changing the various types of information, for example, in accordance with various input operations equivalent to various input operations input to the mobile information terminal owned by the user. On the other hand, when the vehicle is in a traveling state as the traveling state of the vehicle, the display mode control means may determine that the acquisition purpose of the various types of information requested by the user is to acquire information necessary for traveling, and display information in a display mode enabling a transition mode for changing the various types of information, for example, in accordance with input operations limited compared with the various input operations input to the mobile information terminal owned by the user.

Accordingly, when the vehicle is stopped, the user can appropriately change the display on the display means to acquire desired information by inputting operations (for example, tapping operation, swiping operation, flicking operation, and the like) similar to those to the mobile information terminal to the display means. As a result, the user can acquire necessary information with operability (operation system) equal to that when the user uses his or her own mobile information terminal, in other words, without any uncomfortable feeling with regard to the operability.

When the vehicle is traveling, the user can appropriately change the display on the display means to quickly acquire information necessary for traveling by inputting operations (for example, only tapping operation) limited compared with the operations of the mobile information terminal to the display means. As a result, a driver can quickly acquire information necessary for traveling in a state of concentrating on vehicle driving.

### Brief Description of Drawings

FIG. 1 is a schematic diagram illustrating an information providing system to which a vehicle information display device according to an embodiment of the present invention can be applied.
FIG. 2 is a flowchart illustrating a display mode switching control program to be executed by a main control section of a mobile information terminal or a vehicle display control ECU illustrated in FIG. 1.
FIG. 3 is a diagram illustrating display modes (stop-time display mode and traveling-time display mode) on a display of a vehicle set by executing the display mode switching control program illustrated in FIG. 2.

### Description of Embodiment

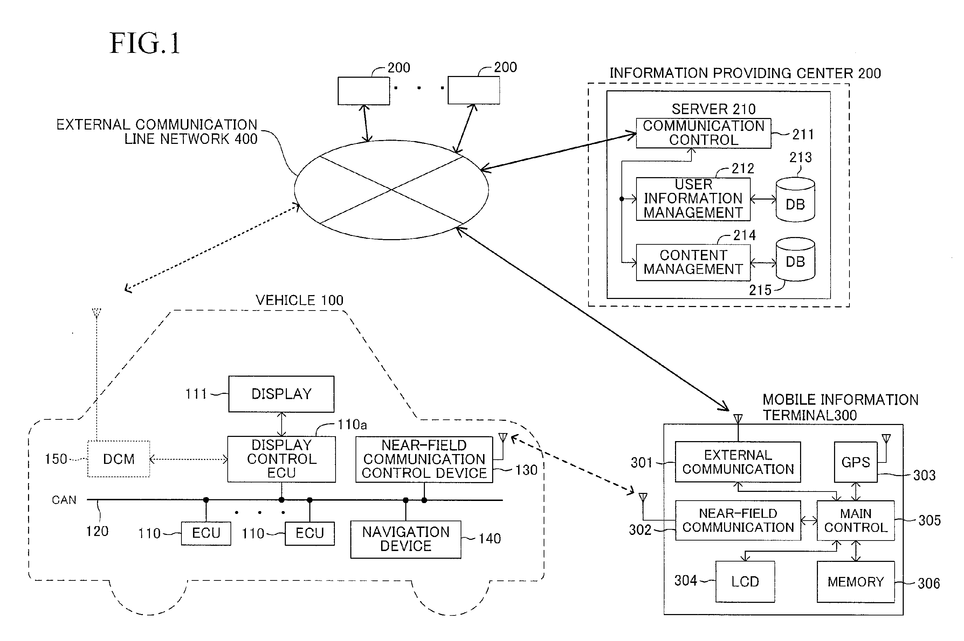

Hereinafter, a vehicle information display device according to an embodiment of the present invention is described referring to the drawings. FIG. 1 is a schematic block diagram schematically illustrating an information providing system that includes the vehicle information display device according to this embodiment.

The information providing system is configured to provide information (content) suited to the acquisition purpose of various types of information changed in accordance with a traveling state of a vehicle 100 to a user (driver) by organically connecting the vehicle 100, a plurality of information providing centers 200, and a mobile information terminal 300 owned by the user and independent of the vehicle 100 to one another via an external communication line network 400 (for example, Internet line network or cellular phone line network) provided from a telecommunications carrier. In this embodiment, for the vehicle 100, an electric vehicle (EV) that drives a travel motor by battery power, a hybrid vehicle (HV) or a plug-in hybrid vehicle (PHV) that includes a travel motor and an internal combustion engine, a related-art vehicle run by an internal combustion engine without including any travel motor, or the like may be employed. In other words, in this embodiment, for the vehicle 100, any driving form can be employed.

The vehicle 100 includes a plurality of electronic control devices 110 (hereinafter referred to as "vehicle ECUs 110") for controlling a traveling state and the like. Each of the vehicle ECUs 110 is connected to a controller area network (CAN) communication line 120 of a CAN communication system, and can input and output various types of signals through the CAN communication line 120. Further, each of the vehicle ECUs 110 includes a microcomputer as a main component formed of a CPU, a ROM, a RAM, and the like, and is provided with a nonvolatile memory and an input/output interface.

One of the plurality of vehicle ECUs 110 connected to the CAN communication line 120 is provided as a display control ECU 100a capable of exercising a function of display mode control means for changing a transition mode by switching a display mode of various types of information provided to the user (driver) of the vehicle 100 as described later. Accordingly, a display 111 is connected as display means that is a human interface to the display control ECU 110a via the input/output interface.
The display 111 is, for example, a touch-panel type liquid crystal display that has an input function, and is arranged near a driver's seat of the vehicle 100. When the user performs a touch operation (specifically, tapping operation of tapping the screen, swiping operation of moving a fingertip in the state of touching the screen, flicking operation of moving a finger as if sweeping in the state of touching the screen, or the like) on the display 111, an input made by the touch operation is output to the display control ECU 110a.

A near-field communication control device 130 configured to achieve near-field communication to/from the mobile information terminal 300 owned by the user is connected to the CAN communication line 120. In this embodiment, as described below, the Bluetooth (trademark) is employed to be implemented as a communication method of the near-field communication control device 130. Needless to say, however, as other communication methods, other near-field communication methods such as the Wi-Fi (trademark) and wired communication using a cradle may be employed to be implemented. In this embodiment, the information display ECU 110a and the near-field communication control device 130 are separately implemented. Needless to say, however, the information display ECU 110a and the near-field communication control device 130 may be integrally configured to be implemented.

A navigation device 140 configured to search for a route to a destination set by the user (driver) and guide the vehicle 100 along the retrieved route is connected to the CAN communication line 120. The navigation device 140 includes, though not illustrated, a vehicle position detection unit that has a GPS unit configured to detect coordinates of a current position of the vehicle 100 based on a radio wave from a GPS satellite and detects the current position and a traveling direction of the vehicle 100, a memory for storing various types of information such as map data, and an electronic control unit configured to execute a program for guiding the vehicle 100 to the destination. A configuration and an operation of the navigation device 140 are not directly related to the present invention. A known configuration and a known operation can be employed. Thus, description thereof is omitted.

The information providing center 200 is a facility for receiving (acquiring) an information providing request signal for requesting provision of information needed (or retrieved) by the user (driver) of the vehicle 100 and providing various types of information requested by the user. Accordingly, the information providing center 200 includes a server 210 that includes a microcomputer as a main component.

The server 210 includes a communication control section 211 connected to the external communication line network 400 to control communication, a user information management section 212 for managing user information regarding the user, a user information storage section 213 (database) for storing a database of the user information, a content management section 214 for managing a content or an application program to be provided to the user, and a content storage section 215 (database) for storing a database of the content or the application program. The user information storage section 213 stores ID information (user name, account name, access password, mail address, or the like) for identifying the user to be retrievable. Thus, after the server 210 has acquired the information providing request signal from the external communication line network 400 via the communication control section 211, the user information management section 212 searches the user information storage section 213 based on the ID information included in the request signal to authenticate the user.

After acquiring the information providing request signal from the user, the content management section 214 searches the content storage section 215 to acquire information included in the request signal and needed by the user, namely, the content or the application program. Thus, in this embodiment, the server 210 transmits content information indicating the content or the application program acquired by the content management section 214 to the mobile information terminal 300 owned by the user via the communication control section 211 and the external communication line network 400. The content storage section 215 stores, for example, various types of data indicating various types of contents or various types of application programs disclosed in the Internet to be retrievable at predetermined storage positions.

The mobile information terminal 300 owned by the user (driver) includes an external communication control section 301 that is a communication interface for connection to the external communication line network 400, a near-field communication control section 302 that is a communication interface for achieving near-field wireless communication of the Bluetooth (trademark), the Wi-Fi (trademark), or the like, a GPS unit 303 for detecting the current position of the mobile information terminal 300 based on a radio wave from the GPS satellite, a touch-panel type liquid crystal display 304 that has an input function, a main control section 305 that includes a microcomputer as a main component and executes communication control and various types of application programs, and a nonvolatile memory 306 for storing the various types of application programs and various types of data of those programs.

In this embodiment, the main control section 305 functions as the display mode control means for appropriately changing a display mode of various types of information provided to the user (driver) of the vehicle 100 to change a transition mode as described later. For the mobile information terminal 300, a compact information terminal device carried by the user, for example, a cellular phone including a smartphone, a tablet terminal having an external communication function, a personal computer connectable to the external communication line network 400, or the like may be employed.

The mobile information terminal 300 thus configured can acquire, in accordance with the user's operation, various types of application programs or various types of contents, namely, content information, from the information providing center 200 connected to the external communication line network 400. Specifically, for example, the user executes an application program (more specifically, browser program) stored in advance in the nonvolatile memory 306 of the mobile information terminal 300 to display a browser on the touch-panel type liquid crystal display 304. Then, the user performs a touch operation (for example, tapping operation, swiping operation, flicking operation, or the like) on the displayed screen to select and input a necessary application program or a necessary content, or directly input a content name or the like. Accordingly, the main control section 305 of the mobile information terminal 300 connects to the external communication line network 400 via the external communication control section 301 to transmit an information providing request signal to the information providing center 200.

At the information providing center 200, the server 210 receives and acquires the information providing request signal via the communication control section 211. Then, the server 210 acquires the application program or the content indicated by the information providing request signal, in other words, the application program or the content requested to be provided by the user, and transmits content information to the mobile information terminal 300. Thus, the main control section 305 of the mobile information terminal 300 can display the application program or the content requested (desired) by the user on the screen of the touch-panel type liquid crystal display 304 based on the transmitted content information.

The main control section 305 of the mobile information terminal 300 can execute, for example, as the above-mentioned application program acquired from the information providing center 200, a navigation application program (navigation application) for searching for the route to the destination set by the user and guiding the vehicle along the retrieved route. Accordingly, when the user (driver) is on board the vehicle 100, one of the route guidance provided by the navigation device 140 mounted on the vehicle 100 and the route guidance provided by the mobile information terminal 300 can be used.

Next, an operation of the vehicle information display device applied to the information providing system configured as described above is described in detail. The vehicle information display device according to this embodiment is achieved by executing near-field wireless communication between the vehicle 100 and the mobile information terminal 300 and long-distance communication between the mobile information terminal 300 and the information providing center 200 via the external communication line network 400. Thus, in this embodiment, the vehicle 100 and the mobile information terminal 300 are mutually authenticated to be registered in advance so as to enable near-field wireless communication.

The mutual registration of the vehicle 100 and the mobile information terminal 300 according to this embodiment is described. In this embodiment, the near-field communication control device 130 provided in the vehicle 100 and the near-field communication control section 302 of the mobile information terminal 300 are connected to each other by using the Bluetooth (trademark) to be able to perform near-field wireless communication. Accordingly, when performing communication by using the Bluetooth (trademark), pairing processing is executed in advance between the near-field communication control device 130 and the near-field communication control section 302. The execution of the pairing processing enables registration of the near-field communication control section 302 (mobile information terminal 300) as a connection partner in the near-field communication control device 130, and registration of the near-field communication control device 130 (vehicle 100) as a connection partner in the near-field communication control section 302. The pairing processing itself for performing communication by using the Bluetooth (trademark) is not directly related to the present invention, and thus is briefly described below.

When performing the pairing processing between the near-field communication control device 130 (vehicle 100) and the near-field communication control section 302 (mobile information terminal 300), though a general procedure, the user (driver) of the vehicle 100 performs, for example, a predetermined registration request operation by a touch operation on the display 111 of the vehicle 100. Accordingly, the display control ECU 110a sets the near-field communication control device 130 to a searchable state so as to enable searching from the mobile information terminal 300 present in a surrounding area.

After the predetermined registration request operation, the user (driver) of the vehicle 100 sets, in the mobile information terminal 300, the near-field communication control section 302 in a search state via the main control section 305 so as to search for the near-field communication control device 130. Accordingly, the mobile information terminal 300 searches for surrounding communication devices compatible with the Bluetooth (trademark) including the near-field communication control device 130, and displays a list of search results on the touch-panel type liquid crystal display 304. Each communication device has a unique device address assigned thereto. The list of the search results displays a device address or an arbitrarily determined device name of the retrieved communication device.

Then, after the user (driver) has selected a desired connection partner, namely, the near-field communication control device 130, from the list of the search results, a link key is generated between the near-field communication control device 130 and the near-field communication control section 302, and the link key and an partner's device address are stored mutually (specifically, in near-field communication control device 130 and near-field communication control section 302). Thus, the pairing processing is completed. A pass key (PIN code) may be required to be input depending on communication device specifications when selection is made by the user. By inputting the correct pass key, the link key is generated.

Thus, in the completed state of the pairing processing between the vehicle 100 (more specifically, near-field communication control device 130) and the mobile information terminal 300 (more specifically, near-field communication control section 302), when the user (driver) carries the mobile information terminal 300 to board the vehicle 100, and operates a start switch (or ignition switch) (not shown), connection is automatically established between the near-field communication control device 130 and the near-field communication control section 302. Alternatively, when the user (driver) carries the mobile information terminal 300 to board the vehicle 100, and performs a predetermined connection operation, connection is established between the near-field communication control device 130 and the near-field communication control section 302. After the connection (pairing) has been established between the near-field communication control device 130 and the near-field communication control section 302 as described above, the establishment of the connection, in other words, availability of the Bluetooth (trademark), can be notified to the user by, for example, an indicator provided in a meter cluster (not shown).

The communicable state of the Bluetooth (trademark) enables to transmit and receive various pieces of information through wireless communication between the vehicle 100 and the mobile information terminal 300. Accordingly, for example, the user (driver) can display for use a desired content acquired from the information providing center 200 by using the mobile information terminal 300 on the display 111 on the vehicle 100 side.

Specifically, under the established state of the above-mentioned connection (pairing), after the content has been acquired from the information providing center 200 by the mobile information terminal 300, the main control section 305 can transmit content information indicating the acquired content to the near-field communication control device 130 on the vehicle 100 side via the near-field communication control section 302. Thus, on the vehicle 100 side, the display control ECU 110a can acquire the content information via the near-field communication control device 130, and generate and display, for example, image data suited for resolution or the like of the display 111 based on the acquired content information. Accordingly, the user (driver) on board the vehicle 100 can check the content information supplied from the mobile information terminal 300 and displayed on the display 111, in other words, the desired content. Then, the user (driver) can scroll or magnify/reduce the display screen, for example, by performing a tapping operation or a swiping operation on the content displayed on the display 111 as in the case of using the mobile information terminal 300.

In this case, when the user (driver) requests display of another content from the currently displayed content, in other words, transition of the display screen by content retrieval or the like, the display control ECU 110a transmits, via the near-field communication control device 300 to the mobile information terminal 300, input information (specifically, for example, connection destination information by selection of hyper link or character input of uniform resource locator (URL) or the like) input by a user's (driver's) tapping operation, swiping operation, or flicking operation equivalent to the mobile information terminal 300. Accordingly, in the mobile information terminal 300, the main control section 305 acquires the input information via the near-field communication control section 302, and transmits an information request signal requesting provision of a content corresponding to the input information to the information providing center 200 via the external communication control section 301 and the external communication line network 400.

Then, the display control ECU 110a on the vehicle 100 side and the main control section 305 on the mobile information terminal 300 side cooperatively repeat transmission and reception of the content information and the input information described above, thereby enabling information (content) desired by the user (driver) to be displayed on the display 111 on the vehicle 100 side. Hereinafter, a touch operation (tapping operation, swiping operation, flicking operation, or the like) performed by the user (driver) on the display screen (content) displayed on the display 111 on the vehicle 100 side as in the case (equivalent to the case) of using the mobile information terminal 300 is also referred to as a "normal touch operation".

By the way, in the vehicle information display device according to this embodiment, in accordance with an acquisition purpose of various types of information requested by the user (driver), which is changed based on a traveling state of the vehicle 100, in other words, whether the vehicle 100 is traveling or stopped (parked), the main control section 305 of the mobile information terminal 300 appropriately switches and controls a display mode including details of various types of contents displayed on the display 111 of the vehicle 100 and a transition mode thereof. In other words, in this embodiment, the main control section 305 of the mobile information terminal 300 functions as display mode control means.

The acquisition purpose of the various types of information requested by the user (driver) tends to be to acquire detailed information or related information by the above-mentioned normal touch operation when the vehicle 100 is stopped (parked). When the vehicle 100 is traveling, the acquisition purpose tends to be to quickly acquire information necessary for traveling by a small number of times of touch operations to concentrate on driving the vehicle 100. In other words, the acquisition purpose of the various types of information requested by the user (driver) tends to be different and changed between the stopped (parked) state and the traveling state of the vehicle 100.

Thus, the main control section 305 of the mobile information terminal 300 switches, when the vehicle 100 is stopped (parked), to a display mode permitting inputting of the normal touch operation (that is, tapping operation, swiping operation, flicking operation, or the like equivalent to mobile information terminal 300) in accordance with a user's (driver's) information acquisition purpose. Then, by displaying contents on the display 111 in this switched display mode, the main control section 305 changes the transition mode to a transition mode for sequentially changing the display screens (that is, contents) in accordance with the above-mentioned user's (driver's) normal touch operation.

On the other hand, when the vehicle 100 is traveling, the main control section 305 of the mobile information terminal 300 switches to a display mode enabling acquisition of information even if the number of times of touch operations is small, more specifically, quick acquisition of information necessary for traveling in accordance with a user's (driver's) information acquisition purpose. Then, by displaying contents on the display 111 in this switched display mode, the main control section 305 changes the transition mode to a transition mode for sequentially changing the display screens (that is, contents) by user's (driver's) simple touch operations limited compared with the normal touch operations.

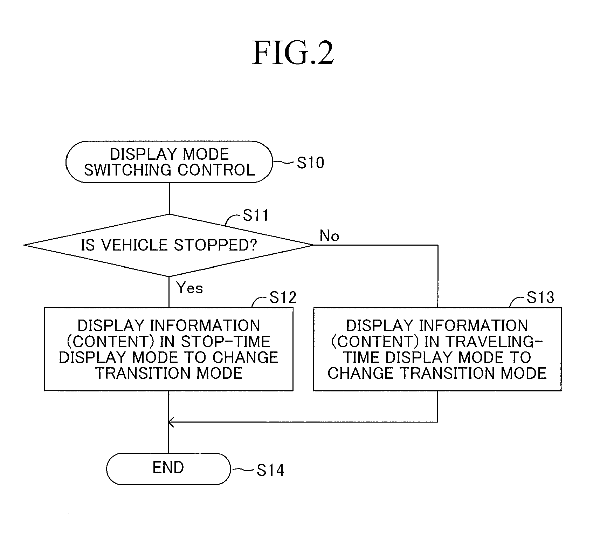

Therefore, in this embodiment, a display mode switching control program illustrated in FIG. 2 is repeatedly executed at a predetermined short time interval so that the main control section 305 of the mobile information terminal 300 can display information (content) on the display 111 on the vehicle 100 side in an appropriate display mode to appropriately change the transition mode. Hereinafter, the display mode switching control program is described in detail.

The user of the mobile information terminal 300 (driver of vehicle 100) has acquired an application program for executing the display mode switching control program in advance from the information providing center 200. Accordingly, after the user (driver) carries the mobile information terminal 300 to board the vehicle 100, and establishes connection between the mobile information terminal 300 (near-field communication control section 302) and the vehicle 100 (near-field communication control device 130), in Step S10, the main control section 305 (more specifically, CPU) starts execution of the display mode switching control program illustrated in FIG. 2, and the processing proceeds to Step S11.

In Step S11, the main control section 305 determines whether or not the vehicle 100 is currently stopped (parked) as a traveling state of the vehicle 100. Specifically, the main control section 305 determines whether or not the vehicle 100 is stopped (parked) based on, for example, a change of a current position (or moving speed that is time change of current position) of the mobile information terminal 300 (in other words, vehicle 100) repeatedly detected by the GPS unit 303 at a predetermined cycle. Specifically, when there is no change in current position of the mobile information terminal 300 (or moving speed is substantially "0"), the main control section 305 determines "Yes" because the vehicle 100 is currently stopped (parked), and the processing proceeds to Step S12. On the other hand, when the current position of the mobile information terminal 300 has been changed (or moving speed is equal to or higher than predetermined speed), the main control section 305 determines "No" because the vehicle 100 is currently traveling, and the processing proceeds to Step S13.

The determination processing in Step S11 is not limited to the determination made by the main control section 305 as to whether or not the vehicle 100 is stopped (parked) based on the change of the current position detected by the GPS unit 303 of the mobile information terminal 300. For example, the main control section 305 of the mobile information terminal 300 may determine whether or not the vehicle 100 is stopped (parked) based on data supplied from the vehicle 100 side.

Specifically, in this case, the main control section 305 transmits, for example, output request information for requesting outputting of data indicating a vehicle speed pulse to the near-field communication control device 130 via the near-field communication control section 302 at a predetermined short cycle. Based on the output request information, the vehicle ECU 110 that has acquired the data indicating the vehicle speed pulse outputs this data to the near-field communication control device 130, and the main control section 305 acquires the data indicating the vehicle speed pulse via the near-field communication control section 302.

Thus, the main control section 305 can determine whether or not the vehicle 100 is currently stopped (parked) by using the vehicle speed pulse acquired at the predetermined short cycle. In other words, when a vehicle speed based on the acquired vehicle speed pulse is substantially "0", the main control section 305 determines "Yes" because the vehicle 100 is currently stopped (parked), and the processing proceeds to Step S12. When the vehicle speed based on the vehicle speed pulse is equal to or higher than a predetermined vehicle speed, the main control section 305 determines "No" because the vehicle 100 is currently traveling, and the processing proceeds to Step S13.

In Step S12, because the vehicle 100 is currently stopped (parked), the main control section 305 displays information (content) on the display 111 on the vehicle 100 side in a display mode permitting inputting of the normal touch operation equivalent to the case of using the mobile information terminal 300, and changes the transition mode to a transition mode for changing the information (content) in accordance with the user's normal touch operation. In other words, when the vehicle 100 is stopped (parked), as described above, a user's (driver's) acquisition purpose of various types of information is to acquire detailed information. Accordingly, the main control section 305 displays, in accordance with the acquisition purpose, desired information (content) requested by the user (driver) on the display 111 in a secured state of operability similar to that of the mobile information terminal 300.

Thus, the user (driver) can perform a tapping operation, a swiping operation, or a flicking operation on the display screen of the display 111 to appropriately change the display screen as in the case of using his or her own mobile information terminal 300. Hereinafter, the display mode for displaying the information (content) on the display 111 so as to enable to change the information (content) in accordance with the normal touch operation when the vehicle 100 is stopped (parked) is referred to as a stop-time display mode.

In Step S13, because the vehicle 100 is currently traveling, the main control section 305 displays information (content) on the display 111 on the vehicle 100 side in a display mode preventing interference with driver's driving of the vehicle 100, and changes the transition mode to a transition mode for changing the information (content) in accordance with the user's simple touch operation (limited touch operation). In other words, when the vehicle 100 is traveling, as described above, a driver's acquisition purpose of various types of information is to quickly acquire information necessary for traveling. Accordingly, the main control section 305 displays, in accordance with the acquisition purpose, desired information (content) requested by the driver on the display 111, for example, in a secured state of operability limited (in other words, simplified) in operation number of times compared with the normal touch operation.

Thus, the driver (user) can appropriately change the display screen, for example, in accordance with the small number of times of tapping operations. Hereinafter, the display mode for displaying the information (content) on the display 111 so as to enable to change the information (content) in accordance with the simplified (limited) touch operation when the vehicle 100 is traveling is referred to as a traveling-time display mode.

After the execution of the processing in Step S12 or Step S13, the flow proceeds to Step S14, and the main control section 305 temporarily stops the execution of the display mode switching control program. Then, after a lapse of a predetermined short period of time, the main control section 305 starts executing the same program in Step S10.

Hereinafter, the switching between the stop-time display mode and the traveling-time display mode, in other words, the changing of the transition mode, by the processing in Step S12 or Step S13 is specifically described. Now, as an example, it is supposed that the user acquires information regarding "Movie". First, when the vehicle 100 is stopped (parked), the main control section 305 executes the processing of Step S12 of the display mode switching control program. Accordingly, the main control section 305 cooperates with the display control ECU 110a on the vehicle 100 side to display information (content) on the display 111 in the stop-time display mode as described above. As a result, for example, by the normal touch operation equivalent to his or her own mobile information terminal 300, the user (driver) can appropriately change and acquire detailed information regarding a movie allowed to be seen in a surrounding area of a current position.

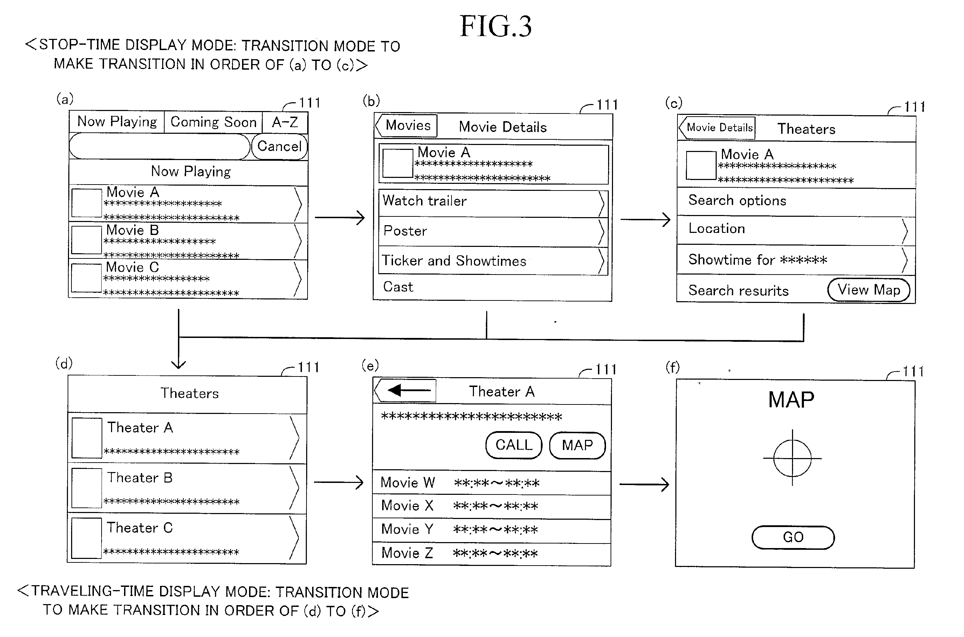

Specifically, the main control section 305 displays, as the stop-time display mode enabling the user's (driver's) normal touch operation, for example, a browser for enabling inputting of a search word on the display 111. Then, the user (driver) inputs, for example, a search word "Movie" by a flicking operation on the browser (same browser as that displayed on touch-panel type liquid crystal display 304 of mobile information terminal 300) displayed on the display 111. Accordingly, the main control section 305 transmits the input search word "Movie" as an information providing request signal to the information providing center 200. After acquisition of relevant information (content) from the information providing center 200, the main control section 305 displays a search result screen relevant to the search word "Movie" on the display 111 as schematically illustrated in part (a) of FIG. 3.

In this case, current position information of the vehicle 100 is transmitted together with the input search word "Movie" to the information providing center 200, and thus as a search result displayed on the search result screen, a title list of movies allowed to be seen near a surrounding area of a current position is displayed. Thus, the user (driver) can find a title of a movie that he or she wishes to see by performing a tapping operation, a swiping operation, or a flicking operation on the screen of the display 111 displaying the title list of the movies to scroll the title list or display a previous or next page, to thereby perform a tapping operation on the title of the movie "Movie A".

Then, in response to the user's (driver's) tapping operation (selection operation), as described above after input information (connection destination information) has been transmitted from the vehicle 100 side to the mobile information terminal 300 side, the main control section 305 acquires content information corresponding to the movie title "Movie A" selected by the user (driver) from the information providing center 200. Then, the main control section 305 supplies the acquired content information to the display control ECU 110a to change the screen of the display 111 as schematically illustrated in part (b) of FIG. 3, and displays detailed information of a movie content as the information (content) corresponding to the movie title "Movie A" selected by the user (driver).

Accordingly, after the user (driver) has checked the detailed information of the movie content displayed on the display 111 to perform a touch operation on the display screen, as schematically illustrated in part (c) of FIG. 3, the screen of the display 111 is changed to enable to display information of a movie theater showing the "Movie A". The user (driver) can check a surrounding area map (not shown) of the movie theater on the display screen of the display 111 by tapping a "View Map" button in the displayed movie theater information. The user (driver) can accordingly set a movie theater to which he or she wishes to go as a destination when necessary. Thus, for example, by searching for a route from the current position to the movie theater (destination) to guide the user (driver) via the navigation device 140 provided in the vehicle 100, or executing the navigation application via the main control section 305 of the mobile information terminal 300, the route from the current position to the movie theater (destination) can be retrieved to guide the user (driver).

In other words, in a state where the vehicle 100 is stopped (parked) and various types of information (various types of contents) are displayed on the display 111 in the stop-time display mode, the user (driver) can acquire, as in the case of using his or her own mobile information terminal 300, desired information (content) suited to a purpose by performing the normal touch operation on the display 111 to change the display screen. In this case, in response to the user's (driver's) normal touch operation, the main control section 305 of the mobile information terminal 300 can acquire content information (illustrated in parts (a) to (c) of FIG. 3) suited to the stop-time display mode, more specifically, suited to the transition mode in the stop-time display mode, to supply the content information to the display control ECU 110a of the vehicle 100.

On the other hand, when the vehicle 100 is traveling, the main control section 305 executes the processing of Step S13 of the display mode switching control program. Accordingly, the main control section 305 cooperates with the display control ECU 110a on the vehicle 100 side to display information (content) on the display 111 in the traveling-time display mode as described above. As a result, for example, when information for setting a movie theater in a surrounding area of a current position as a destination is to be acquired, information (content) is displayed in the traveling-time display mode compatible with a simplified touch operation (more specifically, operability limited in number of times of touching operations), and thus the user (driver) can acquire information for setting a destination by a small number of times of transitions.

On a browser displayed in the traveling-time display mode, in order to facilitate inputting of a search word, for example, a group of search words input in the past stop-time display mode is displayed, and the driver can select and input a search word from the search word group by a tapping operation. Alternatively, a browser enabling voice input or the like can be displayed.

To describe the traveling-time display mode specifically, for example, on the browser displayed on the display 111, the driver selects and inputs a search word "Movie" from the search word group by a touch operation. In this case, in order to suit a driver's acquisition purpose of various types of information during traveling, the main control section 305 transmits a search word "Theater" as an information providing request signal to the information providing center 200 based on the input search word "Movie". After acquisition of relevant information (content) from the information providing center 200, the main control section 305 displays a list of "Theater" in the surrounding area of the current position on the display 111 as schematically illustrated in part (d) of FIG. 3.

In other words, even when seeing a movie, in the traveling state of the vehicle 100, a driver's acquisition purpose of various types of information may be to quickly acquire information indicating a place of a movie theater in the surrounding area of the current position and to quickly set the movie theater as a destination. Accordingly, the main control section 305 of the mobile information terminal 300 acquires, as a search result with respect to the search word "Movie", the list of "Theater" in the surrounding area of the current position as content information, and supplies the content information to the display control ECU 110a to display the content information on the display 111. Thus, for example, the driver can select "Theater A" as a nearest movie theater from the list of movie theaters displayed by distance on the display 111 by only a tapping operation. Needless to say, as in the above-mentioned case, the main control section 305 can transmit the current position information of the vehicle 100 to the information providing center 200.

After input information has been transmitted from the vehicle 100 side to the mobile information terminal 300 side in response to the driver's tapping operation (selection operation), the main control section 305 acquires content information corresponding to the movie theater "Theater A" selected by the driver from the information providing center 200. Then, the main control section 305 supplies the acquired content information to the display control ECU 110a to change, as schematically illustrated in part (e) of FIG. 3, the display screen of the display 111, and displays a list of movies shown at the "Theater A" selected by the driver and a "MAP" button.

Accordingly, after the driver has tapped the displayed "MAP" button, the main control section 305 acquires content information indicating a place (map) of the movie theater "Theater A" from the information providing center 200 in response to the driver's tapping operation. Then, the main control section 305 supplies the acquired content information to the display control ECU 110a to change, as schematically illustrated in part (f) of FIG. 3, the display screen of the display 111, and displays, for example, a "GO" button together with a surrounding area map (not shown) of the "Theater A".

Thus, the driver can set the selected movie theater "Theater A" as a destination by tapping the "GO" button displayed on the display 111. By setting the movie theater "Theater A" as the destination, the navigation device 140 of the vehicle 100 can search for a route from a current position to the "Theater A" (destination) to guide the driver. Alternatively, by executing the navigation application, the main control section 305 of the mobile information terminal 300 can search for the route from the current position to the "Theater A" (destination) to guide the driver.

In other words, in a state where the vehicle 100 is traveling and various types of information (various types of contents) are displayed on the display 111 in the traveling-time display mode, for example, the driver can acquire information necessary for traveling, which is desired information (content) suited to a purpose, only by a tapping operation on the display 111. In this case, by acquiring the content information suited to the transition mode in the traveling-time display mode, the number of times of transitions necessary until desired target information (content) is acquired can be reduced compared with the transition mode in the stop-time display mode. As a result, the user (driver) can quickly acquire the desired target information (content).

Further, for example, in a case where the vehicle 100 is temporarily stopped and then traveling of the vehicle 100 is started while the user (driver) appropriately changes the desired information (content) to check the displayed information based on the display on the display 111 in the stop-time display mode, the main control section 305 of the mobile information terminal 300 switches the display of the display 111 from the stop-time display mode to the traveling-time display mode. In other words, the main control section 305 of the mobile information terminal 300 repeatedly executes the above-mentioned display mode switching control program at a predetermined short cycle. When the vehicle 100 is stopped (parked), the main control section 305 determines "Yes" in Step S11 to execute processing of Step S12, and displays information (content) on the display 111 in the stop-time display mode. When the vehicle 100 starts traveling from this condition, the main control section 305 determines "No" in Step S11 to execute processing of Step S13, and displays information (content) on the display 111 in the traveling-time display mode.

Thus, for example, in a case where the user (driver) has input the search word "Movie" on the browser displayed in the stop-time display mode as described above, in the stopped state of the vehicle 100, the main control section 305 of the mobile information terminal 300 can display detailed information (content) regarding a movie content on the display 111 by changing the screen in order of (a) to (c) of FIG. 3 in accordance with a user's (driver's) purpose of knowing the movie content (acquiring detailed information). When the vehicle 100 starts traveling in this condition, the main control section 305 can display detailed information regarding the movie theaters illustrated in parts (d) to (f) of FIG. 3 by immediately changing one of the screen displays illustrated in parts (a) to (c) of FIG. 3 to the screen display illustrated in part (d) of FIG. 3 in accordance with a driver's purpose of traveling to the movie theater (acquiring information necessary for traveling).

As can be understood from the foregoing, according to the above-mentioned embodiment, the main control section 305 of the mobile information terminal 300 can change the transition mode of information (content) by appropriately switching the display mode of information (content) displayed on the display 111 mounted on the vehicle 100 in accordance with a user's (driver's) acquisition purpose of various types of information changed based on the traveling state of the vehicle 100. Specifically, when the vehicle 100 is stopped (parked), the main control section 305 of the mobile information terminal 300 can display the information (content) on the display 111 in the stop-time display mode to achieve the user's (driver's) acquisition purpose of detailed information (or various types of information). On the other hand, when the vehicle 100 is traveling, the main control section 305 of the mobile information terminal 300 can display the information (content) on the display 111 in the traveling-time display mode to achieve the driver's acquisition purpose of information necessary for traveling.

Accordingly, while the information (content) is displayed in the stop-time display mode, the user (driver) can acquire desired information (content) by performing the normal touch operation (tapping operation, swiping operation, flicking operation, or the like) on the display 111 of the vehicle 100 to appropriately change the display screen. As a result, the user (driver) can acquire necessary information (content) by operability (operation system) equal to that when the user (driver) uses his or her own mobile information terminal 300, in other words, without any uncomfortable feeling with regard to the operability.

While the information (content) is displayed in the traveling-time display mode, the user (driver) can quickly acquire the information (content) necessary for traveling, for example, only by a tapping operation limited to be simplified (specifically, reduced in number of times of operations) compared with the normal touch operation on the display 111 of the vehicle 100 to change the display screen by a small number of times of transitions. As a result, the driver can quickly acquire the information (content) necessary for traveling in a state of concentrating on driving of the vehicle 100.

In the embodiment, the main control section 305 of the mobile information terminal 300 owned by the user (driver) executes the above-mentioned display mode switching control program as the display mode control means. In other words, the main control section 305 of the mobile information terminal 300 switches the display mode of the information (content) on the display 111 between the stop-time display mode and the traveling-time display mode in accordance with the user's acquisition purpose of various types of information changed based on the traveling state of the vehicle 100.

By the way, in this case, the display control ECU 110a of the vehicle 100 can execute the above-mentioned display mode switching control program as the display mode control means, and cooperate with the main control section 305 of the mobile information terminal 300 to switch the display mode of the display 111 between the stop-time display mode and the traveling-time display mode in according with the user's (driver's) acquisition purpose of various types of information. Hereinafter, a first modified example is described. In the description below, portions similar to those of the above-mentioned embodiment are denoted by similar reference symbols, and detailed description thereof is omitted.

In Step S10, the display control ECU 110a starts execution of the display mode switching control program illustrated in FIG. 2. In Step S11, the display control ECU 110a determines whether or not the vehicle 100 is currently stopped (parked). Specifically, in the first modified example, the display control ECU 110a determines whether or not the vehicle 100 is stopped (parked) based on, for example, a change of a current position (or moving speed) of the vehicle 100 detected by the navigation device 140 connected to the CAN communication line 120. Then, when there is no change in current position of the vehicle 100 (or moving speed is substantially "0"), the display control ECU 110a determines "Yes" because the vehicle 100 is currently stopped (parked), and the processing proceeds to Step S12. On the other hand, when the current position of the vehicle 100 has been changed (or moving speed is equal to or higher than predetermined speed), the display control ECU 110a determines "No" because the vehicle 100 is currently traveling, and the processing proceeds to Step S13.

In Step S12, because the vehicle 100 is currently stopped (parked), the display control ECU 110a displays information (content) on the display 111 in the stop-time display mode in accordance with a user's (driver's) acquisition purpose of various types of information. Accordingly, the display control ECU 110a supplies, for example, in order to display the information (content) on the display 111 in a transition mode for changing in the above-mentioned order of (a), (b), and (c) of FIG. 3, input information input by a user's (driver's) tapping operation, a swiping operation, or a flicking operation to the main control section 305 of the mobile information terminal 300, and requests provision of content information corresponding to the input information (connection destination information). The main control section 305 of the mobile information terminal 300 acquires the content information corresponding to the supplied input information (connection destination information) from the information providing center 200, and supplies the acquired content information to the display control ECU 110a.

In Step S13, because the vehicle 100 is currently traveling, the display control ECU 110a displays information (content) on the display 111 in the traveling-time display mode in accordance with a driver's acquisition purpose of information. Accordingly, the display control ECU 110a supplies, for example, in order to display the information (content) on the display 111 in a transition mode for changing in the above-mentioned order of (d), (e), and (f) of FIG. 3, input information input by a driver's (user's) tapping operation to the main control section 305 of the mobile information terminal 300, and requests provision of content information corresponding to the input information (connection destination information). The main control section 305 of the mobile information terminal 300 acquires the content information corresponding to the supplied input information (connection destination information) from the information providing center 200, and supplies the acquired content information to the display control ECU 110a.

After the execution of the processing in Step S12 or Step S13, the flow proceeds to Step S14, and the display control ECU 110a temporarily stops the execution of the display mode switching control program. Then, after a lapse of a predetermined short period of time, the display control ECU 110a starts executing the same program in Step S10 again.

As can be understood from the foregoing, according to the first modified example, as in the case of the above-mentioned embodiment, the display control ECU 110a on the vehicle 100 side can appropriately change the display mode of information (content) displayed on the display 111 mounted on the vehicle 100 in accordance with a user's (driver's) acquisition purpose of various types of information changed based on the traveling state of the vehicle 100. Accordingly, when the vehicle 100 is stopped (parked), the user (driver) can acquire necessary information (content) with operability (operation system) equal to that when the user (driver) uses his or her own mobile information terminal 300, in other words, by changing the information (content) without any uncomfortable feeling with regard to the operation system. On the other hand, when the vehicle 100 is traveling, the driver can quickly acquire information (content) necessary for traveling, for example, by a small number of times of transitions, in a state of concentrating on driving of the vehicle 100.

In the above-mentioned first modified example, the user (driver) carries the mobile information terminal 300 to board the vehicle 100, and the display control ECU 110a acquires the content information displayed in the stop-time display mode or the content information displayed in the traveling-time display mode from the main control section 305 of the mobile information terminal 300. In other words, in the first modified example, the main control section 305 of the mobile information terminal 300 makes an access to the information providing center 200 via the external communication control section 301 to acquire content information corresponding to the stop-time display mode or the traveling-time display mode, and supplies the acquired content information to the information display ECU 110a.

By the way, in this case, another modified example where the vehicle 100 directly acquires content information corresponding to the stop-time display mode or the traveling-time display mode from the information providing center 200 can be implemented. When this second modified example is implemented, as indicated by a broken line illustrated in FIG. 1, the vehicle 100 includes a known data communication module (DCM) 150 that is a communication interface for connection to the external communication line network 400.

Thus, in Step S12, the display control ECU 110a acquires, in accordance with a user's (driver's) acquisition purpose of various types of information, content information for changing the display screen by a user's tapping operation, swiping operation, or flicking operation from the information providing center 200 via the DCM 150 as illustrated in parts (a), (b), and (c) of FIG. 3. As a result, the display control ECU 110a can display information (content) on the display 111 in the stop-time display mode.

In addition, in Step S13, the display control ECU 110a requests, in accordance with a driver's acquisition purpose of various types of information, content information for changing the display screen only by, for example, a user's tapping operation from the information providing center 200 via the DCM 150 as illustrated in parts (d), (e), and (f) of FIG. 3. As a result, the display control ECU 110a can display information (content) on the display 111 in the traveling-time display mode.

Thus, the second modified example can provide the same effects as those of the embodiment and the first modified example.

In the embodiment and the modified examples, the information (content) acquired from the information providing center 200 is displayed by using the display 111 mounted on the vehicle 100. In this case, another modified example where the information (content) acquired from the information providing center 200 is displayed on the touch-panel type liquid crystal display 304 of the mobile information terminal 300 owned by the user by changing in order of the stop-time display mode (changing in the above-mentioned order of (a) to (c) of FIG. 3) and the traveling-time display mode (changing in the above-mentioned order of (d) to (f) of FIG. 3) in accordance with a user's acquisition purpose of various types of information can be implemented.

According to this third modified example, for example, even when the display 111 is not mounted on the vehicle 100, in the vehicle 100 which the user is on board, the user can display the information (content) that the mobile information terminal 300 or the DCM 150 has acquired from the information providing center 200 on the touch-panel type liquid crystal display 304. In other words, in this case, when the vehicle 100 is stopped (parked), various pieces of detailed information (content) can be displayed in the stop-time display mode of the touch-panel type liquid crystal display panel 304 of the mobile information terminal 300, and the display screen can be changed in accordance with a user's normal touch operation (tapping operation, swiping operation, flicking operation, or the like). On the other hand, when the vehicle 100 is traveling, for example, even the display screen of desired information (content) can be changed by a small number of times of transitions in accordance with a user's touch operation. Thus, as in the above-mentioned case, the same effects as those of the embodiment and the modified examples can be provided.

The present invention to be carried out is not limited to the above-mentioned embodiment and modified examples, and various changes can be made without departing from the object of the present invention.

For example, the embodiment and the modified examples have been described by way of the case where the user (driver) inputs the search word "Movie" and acquires information regarding the search word. In this case, for example, when there is a schedule (specifically, restaurant or hotel reservation or the like) set in advance by the user, information (content) for setting a destination concerning the schedule or information (content) of a surrounding area of the destination can be displayed on the display 111 in the stop-time display mode or the traveling-time display mode. As in the above-mentioned case, the information (content) can be displayed on the display 111 in an appropriate display mode suited to a user's (driver's) acquisition purpose of various types of information changed based on the traveling state of the vehicle 100, more specifically, an appropriate transition mode.

## Claims

1. A vehicle information display device, comprising:
display means for displaying various types of information requested by a user on board a vehicle to the user and enabling the user to perform various input operations; and
display mode control means for controlling a display mode of the various types of information displayed on the display means,
wherein the display mode control means is configured to:
determine a traveling state of the vehicle; and
change, based on the determined traveling state of the vehicle, a transition mode for sequentially changing the various types of information requested by the user and displayed by the display means.

2. A vehicle information display device according to claim 1, wherein the display mode control means changes the transition mode in accordance with an acquisition purpose of the various types of information requested by the user, which is changed based on the traveling state of the vehicle.

3. A vehicle information display device according to claim 2, wherein the display mode control means is configured to:
determine the traveling state of the vehicle between a stopped state and a traveling state; and
change the transition mode in accordance with the acquisition purpose of the various types of information, which is different between the stopped state and the traveling state of the vehicle.

4. A vehicle information display device according to claim 3, wherein the display mode control means is configured to:
determine, when the vehicle is stopped, that the acquisition purpose of the various types of information is to acquire detailed information, and change the transition mode to achieve the acquisition purpose; and
determine, when the vehicle is traveling, that the acquisition purpose of the various types of information is to acquire information necessary for traveling of the vehicle, and change the transition mode to achieve the acquisition purpose.

5. A vehicle information display device according to claim 3 or 4, wherein the display mode control means is configured to:
change, when the vehicle is stopped, the transition mode to a transition mode for changing the various types of information requested by the user and displayed by the display means in accordance with various input operations input to the display means by the user; and
change, when the vehicle is traveling, the transition mode to a transition mode for changing the various types of information requested by the user and displayed by the display means in accordance with input operations input to the display means, which are limited compared with the various input operations.

6. A vehicle information display device according to any one of claims 1 to 5,
wherein the various types of information displayed by the display means comprise information provided at least from an outside, and
wherein the display mode control means acquires various types of information suited to the changed transition mode from the outside.

7. A vehicle information display device according to claim 6, wherein the various types of information provided from the outside are acquired via a mobile information terminal owned by the user on board the vehicle, and supplied from the mobile information terminal to the display mode control means to be displayed on the display means.

8. A vehicle information display device according to claim 7, wherein the display mode control means is provided at the mobile information terminal.

9. A vehicle information display device according to claim 7 or 8, wherein the display mode control means changes, when the traveling state of the vehicle is a predetermined state, the transition mode to a transition mode for changing the various types of information requested by the user and displayed by the display means in accordance with various input operations input to the display means by the user, which are equivalent to various input operations input to the mobile information terminal by the user.

10. A vehicle information display device according to claim 9, wherein the display mode control means is configured to:
change, when the vehicle is stopped, the transition mode to a transition mode for changing the various types of information requested by the user and displayed by the display means in accordance with the various input operations input to the display means by the user, which are equivalent to the various input operations input to the mobile information terminal by the user; and
change, when the vehicle is traveling, the transition mode to a transition mode for changing the various types of information requested by the user and displayed by the display means in accordance with input operations input to the display means, which are limited compared with the various input operations input to the mobile information terminal by the user.

11. A vehicle information display device according to any one of claims 7 to 10, wherein the display means is provided at the mobile information terminal.
